# EUROPEAN PATENT APPLICATION

(11) **EP 3 064 433 A1**
(43) Date of publication of application: **07.09.2016**
(21) Application number: 14857799.2
(22) Date of filing: 24.10.2014
(51) Int. Cl.: B64D 11/02, A47G 1/16, F16B 5/06, F16B 21/06

(54) **STRUCTURE FOR MOUNTING AIRCRAFT LAVATORY COMPARTMENT UNIT FURNITURE**

(30) Priority: 30.10.2013 JP 2013225320
(71) Applicant: The Yokohama Rubber Co., Ltd., Tokyo 105-8685 (JP)
(72) Inventor: HIROSE, Ayano, Hiratsuka-shi Kanagawa 254-8601 (JP); KOBAYASHI, Takafumi, Hiratsuka-shi Kanagawa 254-8601 (JP); TAGUCHI, Yuji, Hiratsuka-shi Kanagawa 254-8601 (JP)
(74) Representative: Dilg, Haeusler, Schindelmann Patentanwaltsgesellschaft mbH
(86) International application number: PCT/JP2014/078329
(87) International publication number: WO 2015/064494

(57) **Abstract**

In order to reduce the weight of aircraft lavatory compartment unit furniture and cost, enhance aesthetics, and ensure mounting strength, a lavatory mirror (10) is attached to a wall board (12) via a plurality of fasteners (18) including synthetic resin female members (20) and synthetic resin male members (22). The synthetic resin male members (22) are attached at a plurality of locations on a rear surface (10B) of the lavatory mirror (10) at intervals, and positioned within the outline of the lavatory mirror (10). The synthetic resin female members (20) are attached at locations on the wall board (12) corresponding to the male members (22) attached to the rear surface (10B) of the lavatory mirror (10). The plurality of female members (20) includes a female tubular portion (2004) inside of which a male tubular portion (2204) of the corresponding male members (22) is inserted, whereby a female locking portion (2006) and a male locking portion (2206) are locked with each other. The lavatory mirror (10) is attached to the wall board (12) with a raised portion (2008) abutting on a male mounting board portion (2202) of the male member (22).

## Description

### Technical Field

The present invention relates to a structure for mounting aircraft lavatory compartment unit furniture.

### Background Art

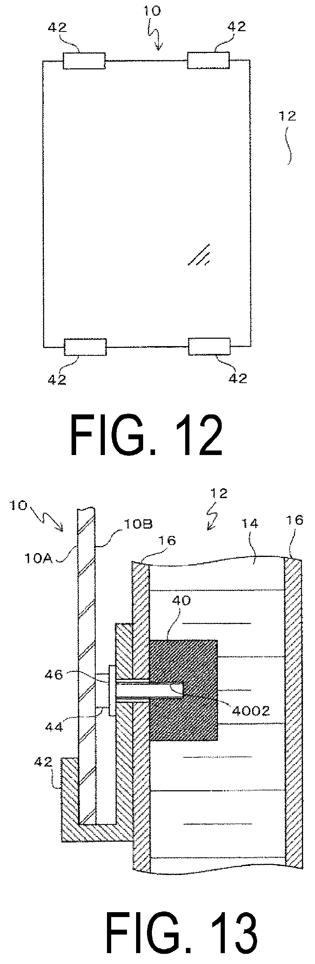

Needless to say, wall boards constituting the frames of aircraft lavatory compartment units require high strength and rigidity as well as a reduction in weight.
Such wall boards (panel materials) may be configured by attaching a surface material to both surfaces of a core material with a honeycomb structure (refer to Patent Document 1) in order to achieve a reduction in the weight while maintaining the strength and rigidity.
The following structure has been disclosed as a mounting structure for mounting aircraft lavatory compartment unit furniture, for example, a lav atory mirror, to a wall board.
That is, as illustrated in FIG. 12 and FIG. 13, insert components 40 made of metal in which female screws 4002 are formed are embedded in advance in a wall board 12.
Screws 44 made of metal inserted into mounting members 42 made of metal which support the edge of a lavatory mirror 10 are screwed into the female screws 4002 of the insert components 40 via metal washers 46 so as to mount the lavatory mirror 10 on the wall board 12 using each of the mounting members 42.

### Citation List

### Patent Literature

Patent Document 1: Japanese Unexamined Patent Application Publication No. 2000-238154A

### Summary of Invention

### Technical Problem

However, the above-described conventional structure includes the metal mounting members 42, the metal screws 44, the metal washers 46, and the metal insert components 40. Thus, there is room for improvement in terms of achieving a reduction in weight in addition to a reduction in component costs.
In addition, because the mounting members 42 are positioned outside of the outline of the lavatory mirror 10, the mounting members 42 can be seen from in front of the lavatory mirror 10 and there is also room for improvement in terms of enhancing the aesthetics of the aircraft lavatory compartment unit.
The present invention has been devised in view of the above circumstances, and an object of the present invention is to provide a structure for mounting aircraft lavatory compartment unit furniture which has advantages in terms of weight reduction, cost reduction, aesthetic enhancement, and securing the mounting strength of the furniture.

### Solution to Problem

In order to achieve the object described above, the present invention is a structure for mounting furniture on a wall board of an aircraft lavatory compartment unit. The structure includes a plurality of fasteners formed of a female member made of synthetic resin and a male member made of synthetic resin, the female member including a female mounting board portion, a female tubular portion projecting from the female mounting board portion, and a female locking portion formed to bulge out on an inner peripheral portion of a leading end opening of the female tubular portion, the male member including a male mounting board portion, a male tubular portion projecting from the male mounting board portion with an outer diameter so that the male tubular portion is inserted into the tubular portion of the female member, and a male locking portion formed to bulge out on an outer peripheral portion of the leading end opening of the male tubular portion, the male locking portion being configured to lock with the female locking portion to prevent movement of the male member and the female member in a direction away from each other in an axial direction. One of the female mounting board portion and the male mounting board portion is attached to a rear surface of the furniture at a plurality of locations so as to be positioned at intervals within an outline of the furniture, the other of the female mounting board portion and the male mounting board portion is arranged at a plurality of locations on the wall board corresponding to the female mounting board portions or the male mounting board portions attached to the rear surface of the furniture, the furniture is attached to the wall board by inserting the male tubular portions of the male members into the female tubular portions of a plurality of the corresponding female members and locking the female locking portions with the male locking portions, and a movement prevention portion is provided on at least one of the furniture side and the wall board side, the movement prevention portion being configured to prevent movement of the furniture in a direction approaching the wall board in a state where the female locking portions and the male locking portions are locked with each other.

### Advantageous Effects of Invention

According to the present invention, because the furniture is attached to the wall board using fasteners formed of female members made of synthetic resin and male members made of synthetic resin, there are advantages in terms of weight reduction and component cost reduction of the aircraft lavatory compartment unit.
In addition, because the fasteners are positioned within the outline of the furniture and the fasteners are not visible from in the front of the furniture, there is an advantage in terms of enhancing the aesthetics of the aircraft lavatory compartment unit.
In addition, setting the tubular portions and the mounting board portions to an appropriate size corresponding to the weight of the furniture makes it possible to secure the mounting strength of the furniture.

### Brief Description of Drawings

- FIG. 1: is a front view illustrating a state where a lavatory mirror is mounted on a wall board using a structure for mounting aircraft lavatory compartment unit furniture according to a first embodiment.
- FIG. 2: is a cross-sectional view of a structure for mounting aircraft lavatory compartment unit furniture according to the first embodiment and illustrates a state before a male member is fitted into a female member.
- FIG. 3: is a cross-sectional view of the structure for mounting aircraft lavatory compartment unit furniture according to the first embodiment and illustrates a state where the male member is fitted into the female member.
- FIG. 4: is a cross-sectional view illustrating a state before the male member is fitted into the female member used in the structure for mounting aircraft lavatory compartment unit furniture according to the first embodiment.
- FIG. 5: is a cross-sectional view illustrating a state where the male member is fitted into the female member used in the structure for mounting aircraft lavatory compartment unit furniture according to the first embodiment.
- FIG. 6: is a cross-sectional view of a structure for mounting aircraft lavatory compartment unit furniture according to a second embodiment and illustrates a state before the male member is fitted into the female member.
- FIG. 7: is a cross-sectional view of the structure for mounting aircraft lavatory compartment unit furniture according to the second embodiment and illustrates a state where the male member is fitted into the female member.
- FIG. 8: is a cross-sectional view illustrating a state before the male member is fitted into the female member used in the structure for mounting aircraft lavatory compartment unit furniture according to a modification of the second embodiment.
- FIG. 9: is a cross-sectional view illustrating a state where the male member is fitted into the female member used in the structure for mounting aircraft lavatory compartment unit furniture according to the modification of the second embodiment.
- FIG. 10: is a cross-sectional view of a structure for mounting aircraft lavatory compartment unit furniture according to a third embodiment and illustrates a state before the male member is fitted into the female member.
- FIG. 11: is a cross-sectional view of the structure for mounting aircraft lavatory compartment unit furniture according to the third embodiment and illustrates a state where the male member is fitted into the female member.
- FIG. 12: is a front view illustrating a state where a lavatory mirror is mounted on a wall board using a structure for mounting aircraft lavatory compartment unit furniture according to a comparative example.
- FIG. 13: is a cross-sectional view of the structure for mounting aircraft lavatory compartment unit furniture according to the comparative example.

### Description of Embodiments

### (First Embodiment)

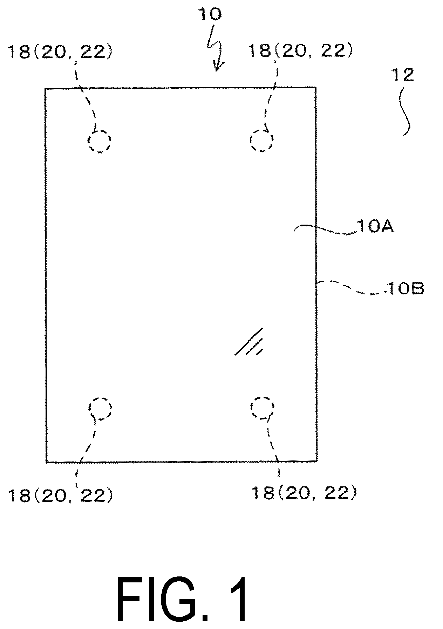

Next, description will be given of a structure for mounting aircraft lavatory compartment unit furniture of the present embodiment with reference to the drawings.
First, description will be given of the furniture.
As illustrated in FIG. 1, in the present embodiment, description will be given of a case where the furniture is the lavatory mirror 10 made of synthetic resin.
The lavatory mirror 10 has a rectangular plate shape and includes a surface 10A which light is incident upon and reflected from, and a rear surface 10B positioned on the opposite side of the surface 10A. The surface 10A is configured by forming a silver reflective film or protective film on a transparent substrate made of synthetic resin.

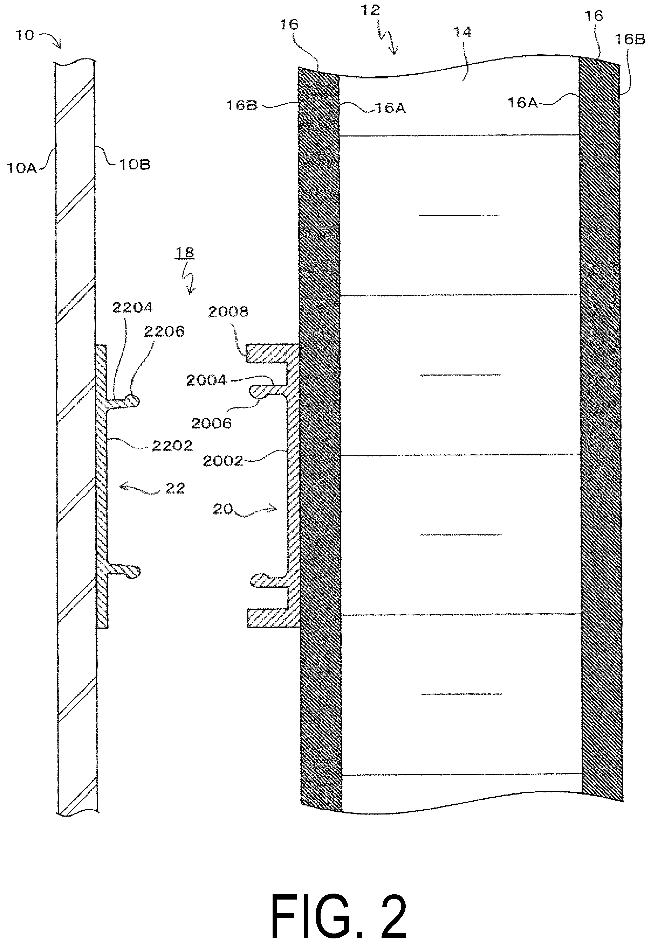

Next, description will be given of a wall board of an aircraft lavatory compartment unit.
As illustrated in FIG. 2, the wall board 12 of the aircraft lavatory compartment unit includes a core material 14 with a plate shape, and a surface material 16 which has a plate shape thinner than the core material 14 and is arranged on both surfaces of the core material 14.
The core material 14 uses a conventionally known honeycomb structure formed of aramid fibers, glass fibers, aluminum, or the like.
The surface material 16 is provided with inner surfaces 16A attached to the core material 14, and surfaces 16B which are positioned on the opposite sides of the inner surfaces 16A and serve as the surfaces of the wall board 12.
A fiber-reinforced composite material formed of synthetic resin and reinforcing fibers is used as the surface material 16. As the fiber-reinforced composite material, a sheet-shaped prepreg material in which synthetic resin such as a phenolic resin or epoxy resin is impregnated in single fibers or fabrics is used. Fabrics and single fibers are formed of reinforced fibers such as glass, aramid, or carbon.
The respective inner surfaces 16A of the surface materials 16 are attached to both surfaces of the core material 14 in the thickness direction by applying pressure and heat in a state where the inner surfaces 16A of the surface materials 16 are stacked on both surfaces of the core material 14 in the thickness direction such that the synthetic resin impregnated in the surface materials 16 is melted, the surface materials 16 are attached to both surfaces of the core material 14 in the thickness direction, thermally cured, and adhered to both surfaces of the core material 14 in the thickness direction.

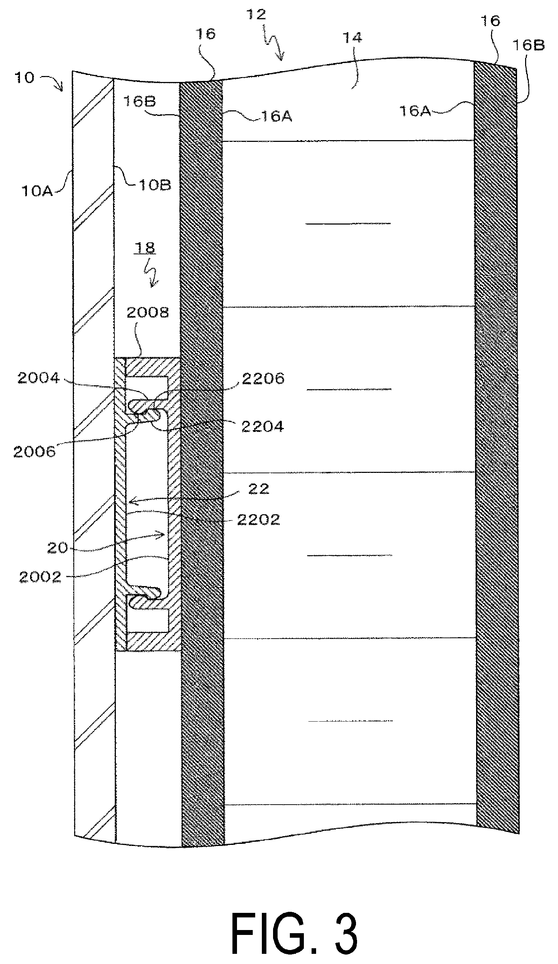

Next, description will be given of the structure for mounting aircraft lavatory compartment unit furniture.
As illustrated in FIG. 3, the lavatory mirror 10 is attached to the wall board 12 via a plurality of fasteners 18 formed of female members 20 made of synthetic resin and male members 22 made of synthetic resin.
It is possible to use polypropylene, nylon, or the like as the synthetic resin of which the fasteners 18 are formed.

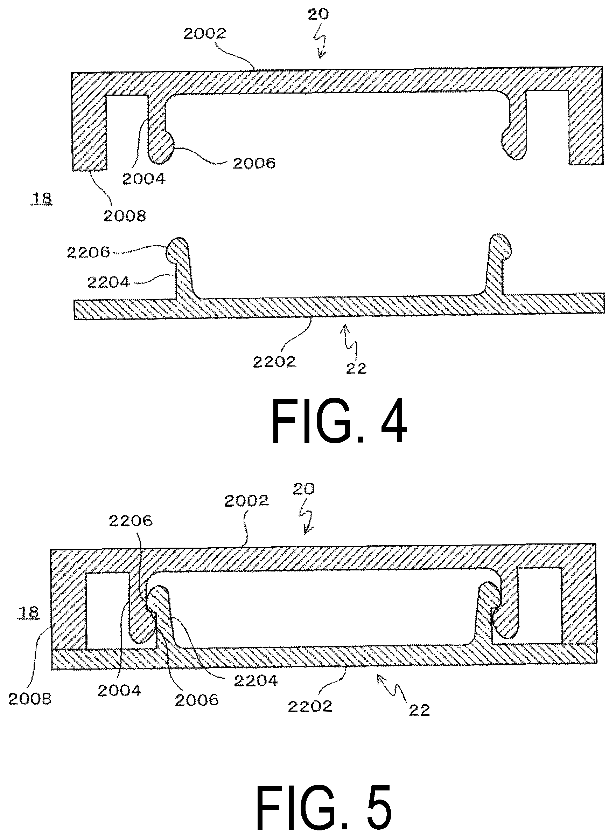

As illustrated in FIG. 4 and FIG. 5, the female member 20 is provided with a female mounting board portion 2002, a female tubular portion 2004, and a female locking portion 2006.
The female mounting board portion 2002 has a disk shape.
The female tubular portion 2004 has a cylindrical shape and projects from the female mounting board portion 2002.
The female locking portion 2006 is formed to bulge out on an inner peripheral portion of a leading end opening of the female tubular portion 2004 and formed with a curved surface so as to be able to smoothly lock with a male locking portion 2206 to be described below.
In addition, a raised portion 2008 serving as a movement prevention portion is formed into an annular shape on an outer peripheral portion of the surface of the female mounting board portion 2002 from which the female tubular portion 2004 projects.

The male members 22 is provided with a male mounting board portion 2202, a male tubular portion 2204, and the male locking portion 2206.
The male mounting board portion 2202 has a disk shape.
The male tubular portion 2204 has a cylindrical shape and projects from the male mounting board portion 2202 with an outer diameter such that the male tubular portion 2204 is inserted into the female tubular portion 2004 of the female member 20.
The male locking portion 2206 is formed to bulge out on the outer peripheral portion of the leading end opening of the male tubular portion 2204, locks with the female locking portion 2006 to create a coupling to prevent the male member 22 and the female member 20 from moving in a direction away from each other, and is formed with a curved surface so as to be able to smoothly lock with the female locking portion 2006.

As illustrated in FIG. 1 and FIG. 2, the male members 22 are arranged by attaching the male mounting board portions 2202 to the rear surface 10B of the lavatory mirror 10 at a plurality of locations so as to be positioned at intervals within the outline of the lavatory mirror 10.
In addition, the female members 20 are arranged by attaching the female mounting board portions 2002 to locations on the wall board 12 that correspond to the male members 22 attached to the rear surface 10B of the lavatory mirror 10.

As illustrated in FIG. 2, for the mounting of the lavatory mirror 10 on the wall board 12, the lavatory mirror 10 is pressed against the wall board 12 in a state where the rear surface 10B of the lavatory mirror 10 faces the wall board 12 and each of the male members 22 is aligned with each of the female members 20.
Due to this, as illustrated in FIG. 3, the male tubular portions 2204 of the male members 22 are inserted into the female tubular portions 2004 of a plurality of the corresponding female members 20, the female locking portions 2006 and the male locking portions 2206 are locked with each other, and the lavatory mirror 10 is attached to the wall board 12 in a state where the raised portions 2008 abut the male mounting board portions 2202 of the male members 22. Accordingly, the male members 22 and the female members 20 are prevented from moving in a direction away from each other by locking the female locking portions 2006 and the male locking portions 2206, and the male members 22 and the female members 20 are prevented from moving in a direction approaching each other by the raised portions 2008, which serve as the movement prevention portions, abutting the male mounting board portions 2202. Thus, there is an advantage in terms of mounting the lavatory mirror 10 on the wall board 12 without rattling.

Here, in the present embodiment, description has been given of a case where the male members 22 are provided on the lavatory mirror 10 and the female members 20 are provided on the wall board 12; however, naturally, the female members 20 may be provided on the lavatory mirror 10 and the male members 22 may be provided on the wall board 12 in a manner opposite to that described above.
In addition, description has been given of a case where the raised portions 2008 are provided on the female members 20; however, the raised portions 2008 may be provided on the male members 22 or the raised portions 2008 may be provided on both of the male members 22 and the female members 20.

According to the present embodiment, since the lavatory mirror 10 which is the aircraft lavatory compartment unit furniture is attached to the wall board 12 via fasteners 18 formed of female members 20 made of synthetic resin and male members 22 made of synthetic resin, there are advantages in terms of weight reduction and component cost reduction of the aircraft lavatory compartment unit.
In addition, since the fasteners 18 are positioned within the outline of the lavatory mirror 10, the space taken up by the lavatory mirror 10 in the aircraft lavatory compartment unit can be minimized and there is an advantage in terms of effectively using the narrow spaces inside aircraft lavatory compartment units.
In addition, since the fasteners 18 are positioned on the rear surface 10B of the lavatory mirror 10 within the outline of the lavatory mirror 10, the fasteners 18 cannot be seen from in front of the lavatory mirror 10 and there is an advantage in terms of enhancing the aesthetics of the aircraft lavatory compartment unit.
In addition, setting the outer diameters of the female tubular portions 2004 and the male tubular portions 2204 and the outer diameters of the female mounting board portions 2002 and the male mounting board portions 2202 to appropriate sizes corresponding to the weight of the lavatory mirror 10 to be mounted makes it possible to secure the mounting strength of the lavatory mirror 10, in other words, the coupling strength of the fasteners 18 and the supporting strength of the wall board 12 which supports the lavatory mirror 10.
That is, increasing the outer diameters of the female tubular portions 2004 and the male tubular portions 2204 makes it possible to disperse more force, which prevents the male members 22 and the female members 20 from moving in a direction away from each other, using the female tubular portions 2004 and the male tubular portions 2204. Accordingly, it is possible to increase the force for immovably coupling the male members 22 and the female members 20 in the axial direction and to secure the coupling strength of the fasteners 18.
In addition, enlarging the female mounting board portions 2002 makes it possible to enlarge the area of the surface material 16 to which the female mounting board portions 2002 are attached and the force with which the wall board 12 supports the lavatory mirror 10 can be further dispersed via the fasteners 18. Accordingly, it is possible to increase the force of the wall board 12 which supports the lavatory mirror 10 via the fasteners 18 and to secure the supporting strength of the wall board 12 which supports the lavatory mirror 10.

Description will be given of a comparative example with reference to FIG. 12 and FIG. 13.
In the comparative example, insert components 40 made of metal in which female screws 4002 are formed are embedded in the wall board 12 in advance.
Mounting members 42 made of metal which support two locations on the upper edge of the lavatory mirror 10 and two locations on the lower edge are provided.
Screws 44 made of metal inserted through the respective mounting members 42 are screwed into the female screws 4002 of the insert components 40 via washers 46 made of metal.
Due to this, the lavatory mirror 10 is mounted on the wall board 12 via each of the mounting members 42.
Accordingly, since four metal components including the mounting member 42 made of metal, the screw 44 made of metal, the washer 46 made of metal, and the insert component 40 made of metal are used in the comparative example, there are disadvantages in terms of weight reduction and component cost reduction of the aircraft lavatory compartment unit.
In addition, since each of the mounting members 42 is positioned outside of the outline of the lavatory mirror 10 and the mounting members 42 can be seen from in the front of the lavatory mirror 10, there is also a disadvantage in terms of enhancing the aesthetics of the aircraft lavatory compartment unit.
In addition, since each of the mounting members 42 is positioned outside of the outline of the lavatory mirror 10, each of the mounting members 42 takes up unnecessary space in the aircraft lavatory compartment unit and there is a disadvantage in terms of effectively using the narrow spaces inside aircraft lavatory compartment units.
In contrast, since the fasteners 18 formed of female members 20 made of synthetic resin and male members 22 made of synthetic resin are used in the structure for mounting aircraft lavatory compartment unit furniture of the present invention, there are advantages in terms of weight reduction and component cost reduction of the aircraft lavatory compartment unit.
In addition, since the fasteners 18 are positioned within the outline of the lavatory mirror 10, the fasteners 18 are hidden by the lavatory mirror 10 and cannot be seen from in front of the lavatory mirror 10 and there is also an advantage in terms of enhancing the aesthetics of the aircraft lavatory compartment unit.
In addition, since the fasteners 18 are positioned within the outline of the lavatory mirror 10, it is possible to minimize the space taken up by the lavatory mirror 10 in the aircraft lavatory compartment unit and to effectively use the narrow spaces inside aircraft lavatory compartment units.

### (Second Embodiment)

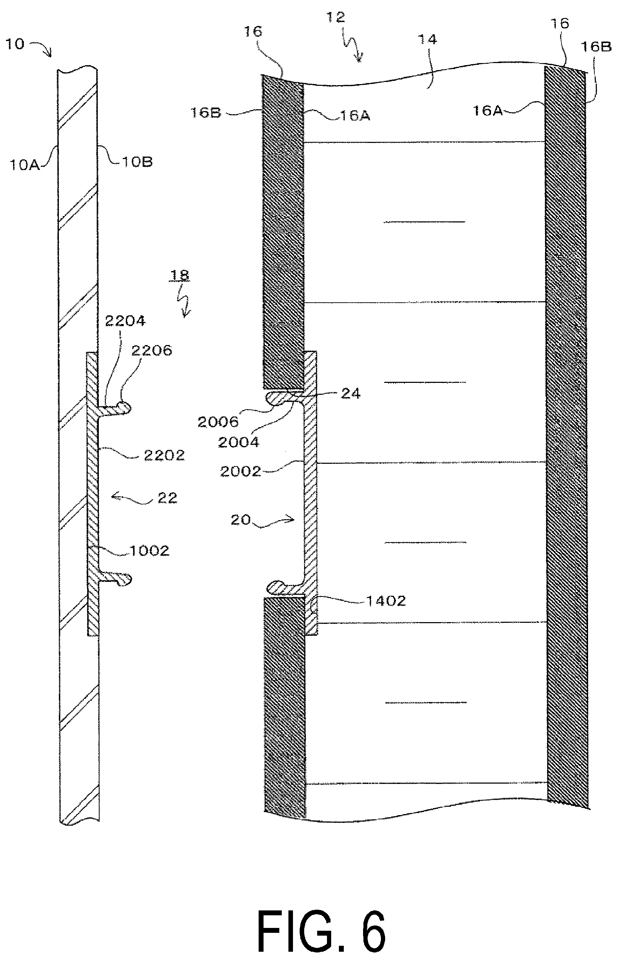

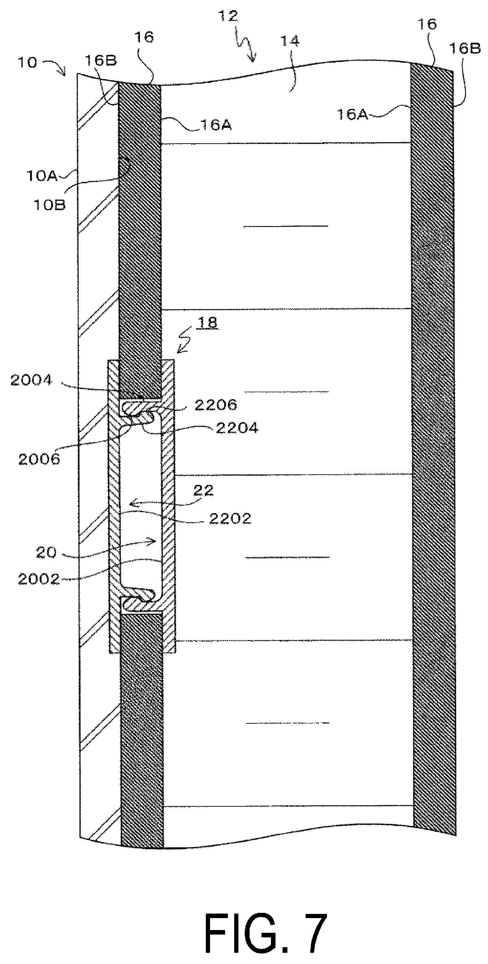

Next, description will be given of the second embodiment.
Here, in the description of the embodiment below, the same reference numerals are applied to the same locations and members as in the first embodiment and description thereof will be omitted.
As illustrated in FIG. 6 and FIG. 7, in the second embodiment, the configuration of the movement prevention portion which prevents the movement of the lavatory mirror 10 in a direction approaching the wall board 12 is different from the first embodiment in the points that the female mounting board portions 2002 of the female members 20 are embedded in the wall board 12 and that the male mounting board portions 2202 of the male members 22 are embedded in the rear surface 10B of the lavatory mirror 10.
In the second embodiment, mounting holes 24 are formed at locations on the surface material 16 of the wall board 12 in which the female members 20 are arranged.
In addition, a plurality of recessed portions 1402 which accommodate the female mounting board portions 2002 of the female members 20 are formed in the surface of the core material 14.
The female mounting board portions 2002 of the female members 20 are accommodated in the recessed portions 1402 and are attached to the inner surface 16A of the surface material 16 overlaid on the core material 14 in a state where the female tubular portions 2004 are positioned inside the mounting holes 24.
In addition, the lavatory mirror 10 is made of synthetic resin in the same manner as the first embodiment, and a plurality of recessed portions 1002 accommodating the male mounting board portions 2202 of the male members 22 are formed in the rear surface 10B of the lavatory mirror 10. The male mounting board portions 2202 of the male members 22 are embedded in the rear surface 10B of the lavatory mirror 10 by being accommodated in and attached to the recessed portions 1002, and the surfaces of the male mounting board portions 2202 from which the male tubular portions 2204 protrude are flush with the rear surface 10B of the lavatory mirror 10.

The lavatory mirror 10 is attached to the wall board 12 in a state where the male tubular portions 2204 of the male members 22 are inserted into the female tubular portions 2004 of a plurality of the corresponding female members 20, the female locking portions 2006 and the male locking portions 2206 are locked, and the rear surface 10B of the lavatory mirror 10 abuts the surface 16B of the wall board 12.
Accordingly, in the second embodiment, the movement prevention portion which prevents the lavatory mirror 10 from moving in the direction approaching the wall board 12 is configured by the rear surface 10B of the lavatory mirror 10 and the surface 16B of the wall board 12.
Naturally, the second embodiment has the same operation and effects as the first embodiment and, because the rear surface 10B of the lavatory mirror 10 and the surface 16B of the wall board 12 are abutted, the space in the thickness direction of the lavatory mirror 10 for mounting the lavatory mirror 10 can be minimized.
Accordingly, there is a further advantage in terms of effectively using the narrow spaces inside aircraft lavatory compartment units.

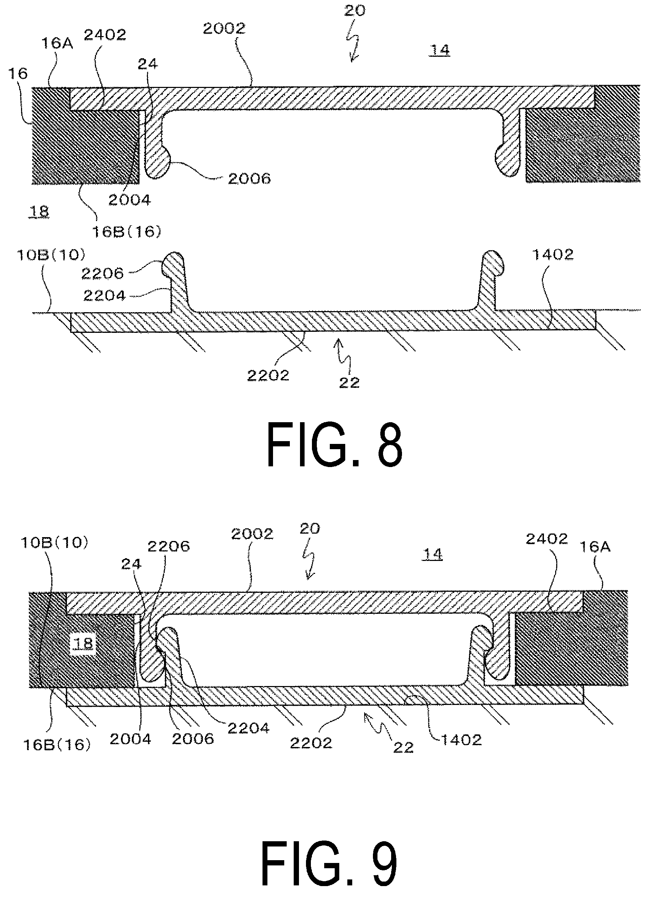

Next, description will be given of a modification of the second embodiment.
In the modification of the second embodiment, the structure for mounting the female members 20 on the wall board 12 is different from the second embodiment, as illustrated in FIG. 8 and FIG. 9.
That is, annular shaped recessed portions 2402 which accommodate the female mounting board portions 2002 of the female members 20 are provided at the periphery of the mounting holes 24 on the inner surface 16A of the surface material 16.
The female mounting board portions 2002 of the female members 20 are accommodated in and attached to the annular shaped recessed portions 2402 in a state where the female tubular portions 2004 are positioned inside the mounting holes 24. In a state where the female members 20 are attached to the surface material 16 in this manner, the rear surfaces of the female mounting board portions 2002 are flush with the inner surface 16A of the surface material 16.
In addition to the same effects as the second embodiment, this modification has an advantage in terms of increasing the production efficiency since it is sufficient to form the mounting holes 24 and the recessed portions 2402 only on the surface material 16.

### (Third Embodiment)

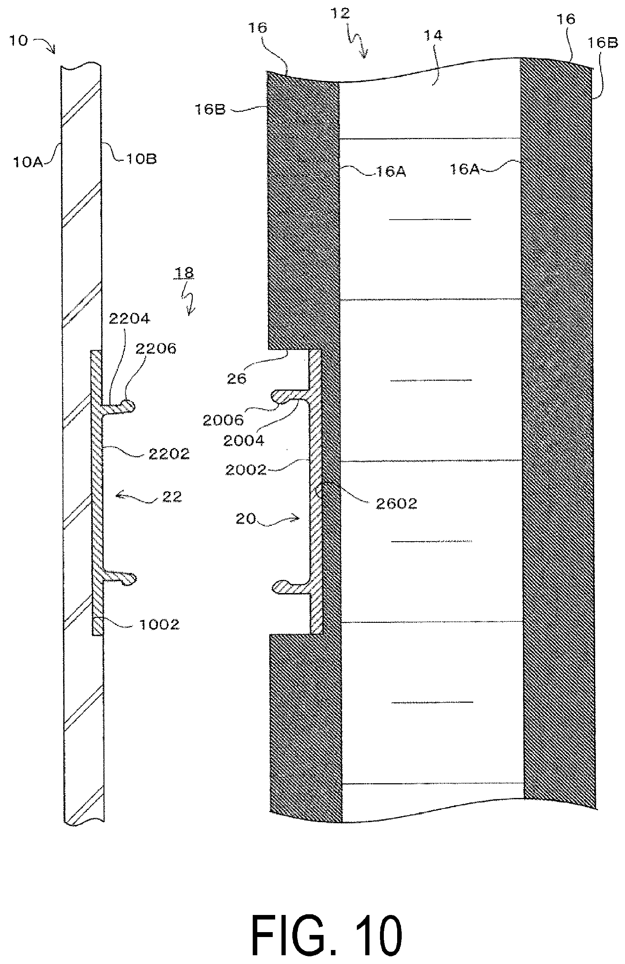

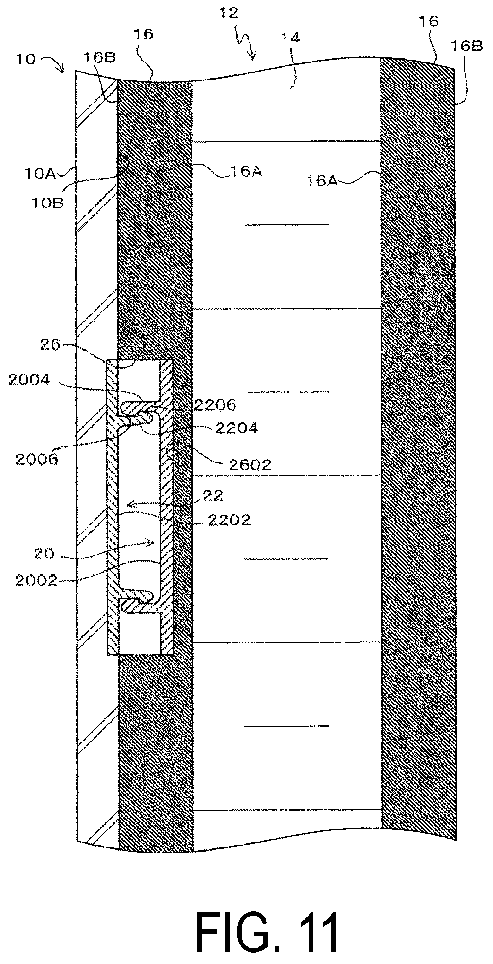

Next, description will be given of a third embodiment.
As illustrated in FIG. 10 and FIG. 11, the third embodiment is different from the second embodiment in the point that the female mounting board portions 2002 of the female members 20 are embedded in recessed portions 26 formed in the surface material 16 of the wall board 12.
As illustrated in FIG. 10 and FIG. 11, in the third embodiment, a plurality of the recessed portions 26 are formed at locations on the surface 16B of the surface material 16 of the wall board 12 on which the female members 20 are arranged.
The female mounting board portions 2002 of the female members 20 are attached to bottom surfaces 2602 of the recessed portions 26 in a state where the female tubular portions 2004 are positioned inside the recessed portions 26.
In addition, the lavatory mirror 10 is made of synthetic resin in the same manner as the first and second embodiments, the male mounting board portion 2202 of the male member 22 is embedded in the rear surface 10B of the lavatory mirror 10, and the surface of the male mounting board portion 2202 from which the male tubular portions 2204 protrude are flush with the rear surface 10B of the lavatory mirror 10.

As illustrated in FIG. 11, the lavatory mirror 10 is attached to the wall board 12 in a state where the male tubular portions 2204 of the male members 22 are inserted into the female tubular portions 2004 of a plurality of the corresponding female members 20, the female locking portions 2006 and the male locking portions 2206 are locked, and the rear surface 10B of the lavatory mirror 10 abuts the surface 16B of the wall board 12.
Accordingly, in the same manner as the second embodiment, the movement prevention portion according to the third embodiment for preventing the lavatory mirror 10 from moving in the direction approaching the wall board 12 is also configured by the rear surface 10B of the lavatory mirror 10 and the surface 16B of the wall board 12.
The third embodiment has the same operation and effects as the second embodiment and has an advantage in terms of effectively using the narrow spaces inside aircraft lavatory compartment units.

Here, in these embodiments, description has been given of cases where the female members 20 (the female mounting board portions 2002) are attached to the wall board 12 and the male members 22 (the male mounting board portions 2202) are attached to the lavatory mirror 10. However, the male members 22 (the male mounting board portions 2202) may be attached to the wall board 12 and the female members 20 (the female mounting board portions 2002) may be attached to the lavatory mirror 10 in a manner unlike each of the above-described embodiments while having the same operation and effects as the above-described embodiments.
In addition, in the embodiments, description has been given of a case where the furniture is the lavatory mirror 10; however, naturally, the furniture may, for example, be a storage shelf or the like as long as it is furniture to be mounted on the wall board 12 of the aircraft lavatory compartment unit.

### Reference Signs List

- 10: LAVATORY MIRROR (FURNITURE)
- 10A: SURFACE
- 10B: REAR SURFACE
- 12: WALL BOARD
- 14: CORE MATERIAL
- 16: SURFACE MATERIAL
- 16A: INNER SURFACE
- 16B: SURFACE
- 18: FASTENER
- 20: FEMALE MEMBER
- 2002: FEMALE MOUNTING BOARD PORTION
- 2004: FEMALE TUBULAR PORTION
- 2006: FEMALE LOCKING PORTION
- 2008: RAISED PORTION (MOVEMENT PREVENTION PORTION)
- 22: MALE MEMBER
- 2202: MALE MOUNTING BOARD PORTION
- 2204: MALE TUBULAR PORTION
- 2206: MALE LOCKING PORTION
- 24: MOUNTING HOLE
- 26: RECESSED PORTION

## Claims

1. A structure for mounting aircraft lavatory compartment unit furniture configured to mount furniture on a wall board of an aircraft lavatory compartment unit, the structure comprising:
a plurality of fasteners formed of a female member made of synthetic resin and a male member made of synthetic resin,
the female member including:
a female mounting board portion,
a female tubular portion projecting from the female mounting board portion, and
a female locking portion formed to bulge out on an inner peripheral portion of a leading end opening of the female tubular portion;
the male member including:
a male mounting board portion,
a male tubular portion projecting from the male mounting board portion with an outer diameter so that the male tubular portion is inserted into the female tubular portion of the female member, and
a male locking portion formed to bulge out on an outer peripheral portion of the leading end opening of the male tubular portion, the male locking portion being configured to lock with the female locking portion to prevent movement of the male member and the female member in a
direction away from each other in an axial direction;
one of the female mounting board portion and the male mounting board portion being attached to a rear surface of the furniture at a plurality of locations so as to be positioned at intervals within an outline of the furniture;
the other of the female mounting board portion and the male mounting board portion being arranged at a plurality of locations on the wall board, the plurality of locations corresponding to the female mounting board portions or the male mounting board portions attached to the rear surface of the furniture;
the furniture being attached to the wall board by inserting the male tubular portions of the male members into the female tubular portions of a plurality of the corresponding female members and locking the female locking portions with the male locking portions; and
a movement prevention portion being provided on at least one of the furniture side and the wall board side, the movement prevention portion being configured to prevent movement of the furniture in a direction approaching the wall board in a state where the female locking portions and the male locking portions are locked with each other.

2. The structure for mounting aircraft lavatory compartment unit furniture according to claim 1, wherein
the wall board includes a core material, and a surface material formed of a fiber-reinforced composite material formed of synthetic resin and reinforcing fibers, the surface material being attached to both surfaces of the core material;
a plurality of recessed portions are formed on the surface of the core material;
a plurality of mounting holes are formed in the surface material; and in the female members or the male members arranged on the wall board, the female mounting board portions or the male mounting board portions are attached to an inner surface of the surface material overlaid on the core material in a state where the female mounting board portions or the male mounting board portions are accommodated in the recessed portions and the female tubular portions or the male tubular portions are positioned inside the mounting holes.

3. The structure for mounting aircraft lavatory compartment unit furniture according to claim 1, wherein
the wall board includes a core material, and a surface material formed of a fiber-reinforced composite material formed of synthetic resin and reinforcing fibers, the surface material being attached to both surfaces of the core material; a plurality of mounting holes are formed in the surface material;
recessed portions are formed around the mounting holes in the inner surface of the surface material attached to the core material; and
in the female members or the male members arranged on the wall board, the female mounting board portions or the male mounting board portions are attached to the recessed portions in a state where the female tubular portions or the male tubular portions are positioned inside the mounting holes.

4. The structure for mounting aircraft lavatory compartment unit furniture according to claim 1, wherein
the wall board includes a core material, and a surface material formed of a fiber-reinforced composite material formed of synthetic resin and reinforcing fibers, the surface material being attached to both surfaces of the core material;
a plurality of recessed portions are formed on the surface of the surface material constituting a surface of the wall board; and
in the female members or the male members arranged on the wall board, the female mounting board portions or the male mounting board portions are attached to bottom surfaces of the recessed portions in a state where the female tubular portions or the male tubular portions are positioned inside the recessed portions.

5. The structure for mounting aircraft lavatory compartment unit furniture according to any one of claims 2 to 4, wherein
a plurality of recessed portions accommodating the female mounting board portions or the male mounting board portions are formed in the rear surface of the furniture;
the female mounting board portions or the male mounting board portions are accommodated in and attached to the recessed portions; and
the surfaces of the female mounting board portions from which the female tubular portions protrude or the surfaces of the male mounting board portions from which the male tubular portions protrude are flush with the rear surface of the furniture.

6. The structure for mounting aircraft lavatory compartment unit furniture according to claim 5, wherein
the rear surface of the furniture and the surface of the wall board are abutted with each other in a state where the female locking portions and the male locking portions are locked with each other; and
the movement prevention portion is formed by the rear surface of the furniture and the surface of the wall board.
